# EUROPEAN PATENT APPLICATION

(11) **EP 1 384 818 A2**
(43) Date of publication of application: **28.01.2004**
(21) Application number: 03077279.2
(22) Date of filing: 22.07.2003
(51) Int. Cl.: E01C 19/52, B65G 7/12

(54) **Apparatus for carrying an object**

(30) Priority: 23.07.2002 GB 0217073
(71) Applicant: Leworthy, Paul, Crediton, Devon EX17 6DL (GB)
(72) Inventor: Leworthy, Paul, Crediton, Devon EX17 6DL (GB)
(74) Representative: Newstead, Michael John

(57) **Abstract**

Apparatus 2 for carrying an object 18 comprising:
i) a rigid elongate shaft 4 having a handle 6 associated with one end;
ii) supporting means 8 associated with the other end of the shaft 4 and adapted to engage a portion of the object 18 to be carried in a manner supporting said object; and
iii) retaining means 16 associated with the shaft 4 and capable of retaining a further portion of the object 18, the retaining means 16 being slidably disposed on the shaft 4.

## Description

The present invention relates to apparatus for carrying an object and more particularly, but not exclusively, to an apparatus for carrying paving slabs. In addition to carrying paving slabs the apparatus could be used for carrying other substantially planar objects such as tiles or roof slates.

The dangers of lifting and carrying heavy objects are well known. When lifting and carrying heavy objects such as paving slabs a person must be careful to ensure that the object is lifted and carried correctly in order to avoid injury, for example back injury. The normal method of carrying objects such as paving slabs is to hold the object in front of the body using two arms. This is not a particularly efficient method of carrying such objects and is also liable to result in injury. Carrying heavy objects, such as paving slabs, by this method can be time consuming since it is usually only possible to carry one at a time.

It is the object of the present invention to overcome some of these limitations or at least to provide an alternative method of carrying heavy objects.

According to the present invention there is provided apparatus for carrying an object comprising:
i) a rigid shaft having a handle associated with one end;
ii) supporting means associated with the other end of the shaft and adapted to engage a portion of the object to be carried in a manner supporting said object; and
iii) retaining means associated with the shaft and capable of retaining a further portion of the object, the retaining means being slidably disposed on the shaft.

This apparatus helps to overcome many of the problems associated with lifting heavy objects. It enables more objects to be carried by a single user at one time as well as offering improved distribution of the load over a users body.

The slidable retaining means enables a wide variety of objects to be carried using the one piece of apparatus since the retaining means can be slid up and down the shaft to take account of the height of the object.

It is preferred that the retaining means comprises a hook which engages with the further portion of the object.

The supporting means preferably comprises a pair of parallel "U" shaped supports connected to the shaft by a "T" bar section, one "U" shaped support associated with each end of the "T" bar section, the "U" shaped supports arranged such that, in use, the object may rest on the base portions of said "U" shaped supports.

The term "T" bar section used herein refers to the fact that the section is connected to the shaft at its mid point such that it resembles an inverted "T". The term "U" shaped supports used herein describes any support member which has a "U" shape or could be described as generally "U" shaped.

The apparatus is preferably made of mild steel and more preferably the steel is powder coated. Powder coating the steel provides a durable and attractive finish and also helps to reduce damage to objects, such as paving slabs, through scraping.

For a better understanding of the present invention reference will now be made to the accompanying drawings showing, solely by way of example, two embodiments of the invention in which:
Fig. 1 is a side view of an apparatus for carrying an object;
Fig. 2 is a front view of the apparatus shown in Fig. 1;
Fig. 3 is a side view of an apparatus for carrying an object loaded with a paving slab;
Fig. 4 is a front view of the apparatus shown in Fig. 3; and
Fig. 5 is a front view of a further embodiment of an apparatus for carrying an object.

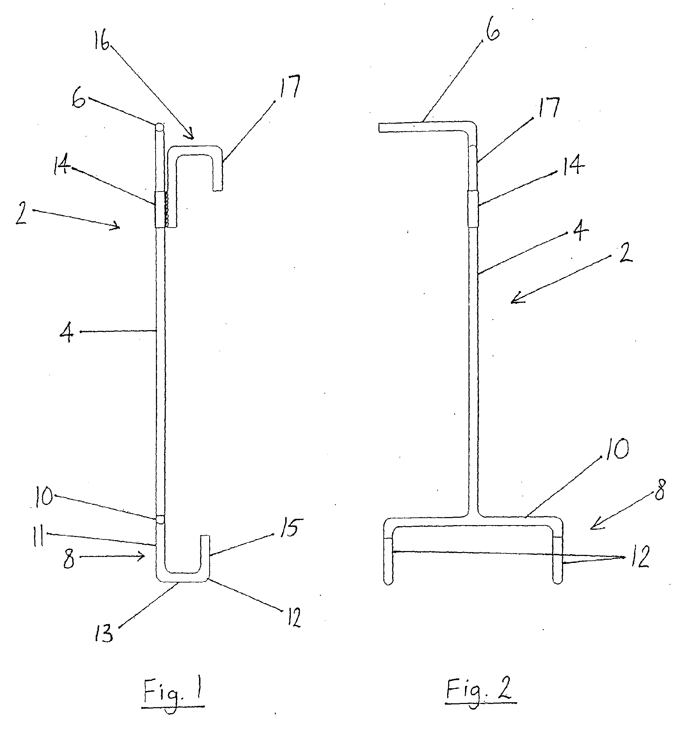

Referring now to Figs. 1 and 2, one embodiment of an apparatus 2 for carrying an object is shown. The apparatus comprises a rigid shaft 4. The shaft 4 is fabricated from a length of 12mm diameter mild steel or any other material which has a similar strength. The apparatus 2 is intended to be used for carrying heavy objects, for example paving slabs. A conventional small paving slab has dimensions of approximately 300mm x 300mm x 38mm and weighs in the region of 8kg. Larger paving slabs having dimensions 610mm x 610mm x 38mm weigh approximately 32kg. For these reasons the apparatus 2 must be made of a material which will not bend, buckle or snap when carrying objects of this weight. Health and Safety regulations limit the weight that may safely be carried by a single person therefore the apparatus 2 should at least be capable of carrying this weight. Preferably, the apparatus 2 should have the capability of carrying objects up to 50kg. In an alternative embodiment the shaft 4 may include a lockable telescopic portion such that the length of the shaft can be varied to suit different sized users and/or objects.

The shaft 4 is provided with a handle 6 at one end. In this embodiment the handle 6 being in the form of a section of the shaft 4 which is bent at right angles. If desired the handle 6 may additionally be covered with a suitable plastics material to improve comfort and provide additional grip for the user. In a situation where the apparatus 2 is used for carrying objects such as roof slates it may be advantageous to have the handle 6 in the form of a closed loop such that it may be used as a rope eye. In such a configuration a user may pass a rope through the rope eye on the apparatus 2 and lift the apparatus in a vertical direction e.g. on to the roof of a house. In an even more preferred embodiment the apparatus 2 is provided with a conventional handle 6 bent at 90° to the shaft 4 and a rope eye which may be formed integrally to the shaft 4 and handle 6 or may be a separate feature which is attached to the apparatus 2 in the region of the handle 6. In this case the rope eye could be in the form of a closed steel loop which could be welded to the handle 6.

In another embodiment of the present invention the handle 6 may be adapted such that the apparatus 2 may be carried by two user's working together. In this embodiment the handle 6 may be in the form of a rigid elongate member attached at its mid-point to the shaft 4. This would allow two users to grasp the handle 6, one at each end, and enable larger or heavier objects to be carried. In this case the handle 6 may suitably be made of the same material as the shaft 4 and the two may conveniently be welded together. Obviously, an apparatus 2 designed to be carried by two user's must be capable of carrying objects having a much greater weight. In order to facilitate this the apparatus 2 may be fabricated from mild steel having a thicker diameter.

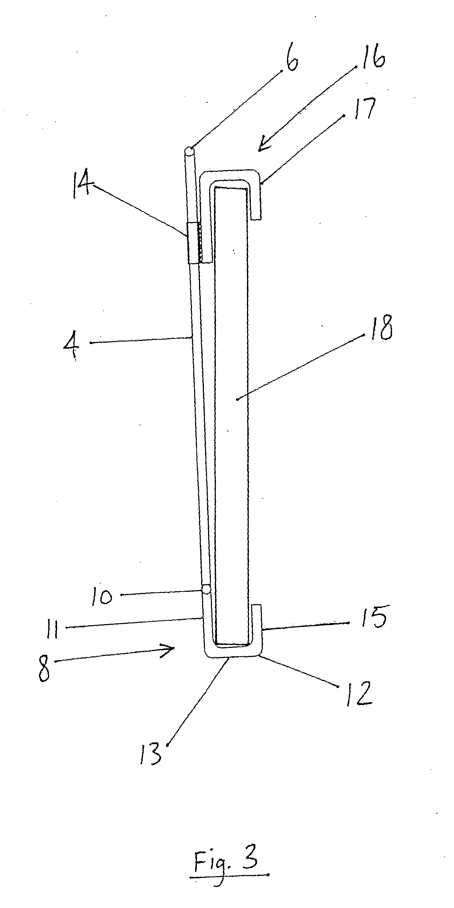

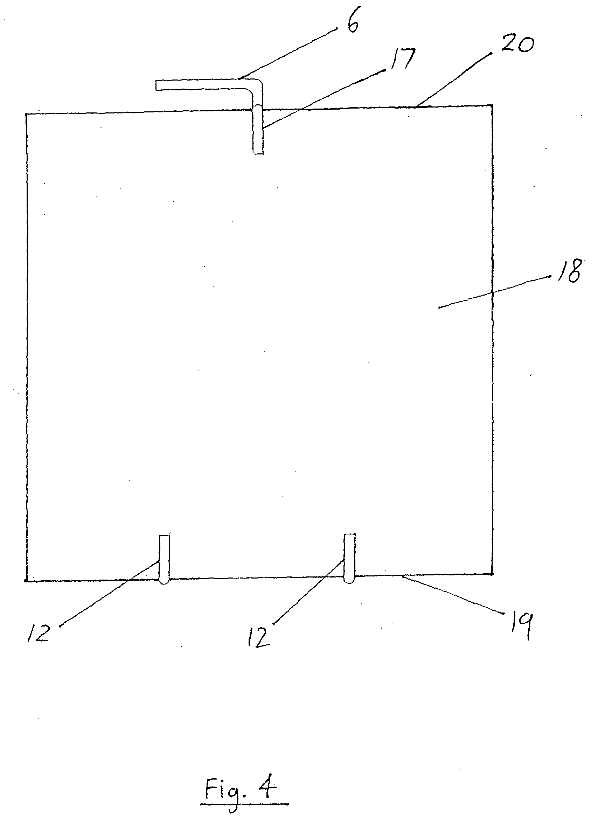

At the opposite end of the shaft 4 from the handle 6 there is provided a supporting means 8 which is adapted such that, in use, it engages a portion of the object to be carried in a manner supporting said object. When the object to be carried is a paving slab then the supporting means 8 is preferably adapted such that it provides support for one edge of the paving slab (See Figs. 3 and 4). The supporting means 8 is in the form of a pair of "U" shaped supports 12 connected to the shaft 4 by a "T" bar section 10. The supporting means 8 is fabricated from a single length of 12mm diameter mild steel and the shaft 4 is welded to the supporting means 8 at the mid point of the "T" bar section 10. The supporting means 8 may be formed into the appropriate configuration in the conventional manner used in steel fabrication. The "T" bar section 10 is parallel to and coplanar with the handle 6. The length of the "T" bar section is dependent on the dimensions of the object the apparatus 2 is designed to carry. For example, when the apparatus 2 is used to carry objects such as paving slabs then in order to provide adequate support and stability it is preferred that the "T" bar section 10 is equal to approximately one third of the length of the paving slab. For example, when the paving slab is 610mm x 610mm then the "T" bar section 10 is preferably approximately 200mm long. In an alternative embodiment the length of the "T" bar section 10 may be adjustable in order to accommodate objects of different sizes. As with the shaft 4 this may take the form of a lockable telescopic section or any other known extension method. In this alternative embodiment it is preferred that each end of the "T" bar section 10 is provided with an adjustable portion in order to maintain balance.

At each end of the "T" bar section 10 there is provided one of the pair of "U" shaped supports 12. The term "U" shaped includes support members having rounded bottom portions as well as those in which the bottom portion is squared off as in Figs. 1 - 4. The first portion 11 of each of the "U" shaped supports 12 extends in a direction away from the handle 6, perpendicular to the "T" bar section 10 and parallel to the shaft 4.

The base portions 13 of the "U" shaped supports 12 are parallel to one another and perpendicular to the first portions 11 and extend out in front of the plane of the handle 6, shaft 4 and "T" bar section 10. The length of the base portion 13 is dependent on the dimensions of the object which the apparatus 2 is intended to carry. For example, when the apparatus 2 is designed to carry a paving slab having a thickness of 38mm then the length of the base portion 13 must be greater than 38mm. Again, alternative embodiments may include adjustable portions such that the length of the base portion 13 can be altered. For example, when carrying objects such as roof tiles which are considerably lighter than paving slabs it would be desirable to have a much longer base portion 13. The end portion 15 of the "U" shaped supports 12 must be of a sufficient length to ensure that the object to be carried is securely held. In the case of a paving slab of 610mm x 610mm then a length of approximately 40mm is suitable.

In an alternative embodiment the supporting means 8 may be in the form of a section of metal sheet bent to form a channel in which the object to be carried is supported. The channel may be connected to the shaft 4 by known means, for example by welding.

In a further alternative embodiment the apparatus 2 may be provided with wheels attached to the supporting means 8 such that the apparatus may be wheeled around. This would help with the transportation of larger objects which are too heavy for one person to lift.

Whilst the described embodiment shows an apparatus 2 having a single supporting means 8 extending out of the plane of the handle 6, shaft 4 and "T" bar section 10 it is also envisaged that the apparatus 2 could comprise a further supporting means extending in the opposite direction to the first supporting means 8. This would allow the user to carry double the quantity of paving slabs or other objects.

Retaining means 16, associated with the shaft 4, is provided for retaining a further portion of the object to be carried. The retaining means 16 is in the form of a hooked portion 17 connected to a section of tubing 14. The hooked portion 17 and the tubing 14 are both fabricated from mild steel. The hooked portion 17 is fabricated from 12mm diameter mild steel and the tubing 14 has a diameter slightly larger than that of the shaft 4 such that it may slide along the shaft 4. The hooked portion 17 and the tubing 14 and are welded together. The tubing 14 is located on the shaft 4 between the handle 6 and the supporting means 8. The retaining means is slidable along an axial direction of the shaft 4. The hooked portion 17 is in the form of an inverted "U" shape and has the same dimensions as the "U" shaped portions of the supporting means 8. The "U" shaped retaining means 16 and the "U" shaped supporting means 8 oppose one another and the retaining means 16 is slidable towards and away from the supporting means 8 along the shaft 4. In an alternative embodiment the retaining means 16 may also be in the form of a section of metal sheet bent to form a channel.

It is preferred that the apparatus 2 is powder coated. The powder used for the process is a mixture of finely ground particles of pigment and resin, which is sprayed onto the surface of the apparatus 2. The charged powder particles adhere to the electrically grounded surface of the apparatus 2 until heated and fused into a smooth coating in a curing oven. The result is a uniform, durable and high quality finish which is not only attractive but prevents undue damage to the object being carried e.g. through scraping. The powder coating may advantageously be of a bright colour which will stand out against a dull background. The apparatus 2 will typically be used outdoors and, as such, it would be beneficial for it to be coated in a colour which will stand out against green, brown, black and grey i.e. the colours of grass, earth, tarmac and paving slabs. If the apparatus is coated in bright orange this will make it easier to locate when it has been left, for example rested against a wall. Alternatively, the apparatus 2 may be painted using any suitable paint or coated with any other suitable material as would be understood by someone skilled in the art.

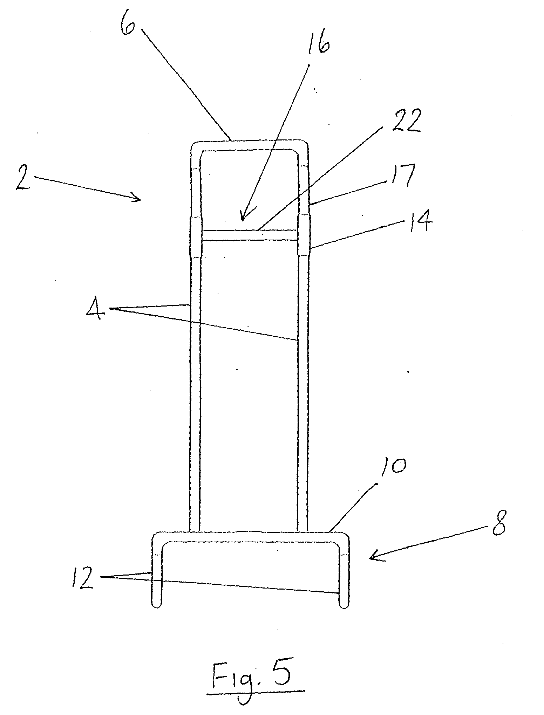

Referring now to Fig. 5, this shows a front view of an further embodiment of an apparatus 2 for carrying an object. The shaft 4 is 12mm diameter mild steel and is generally "U" shaped. The end of each of the stems of the "U" is welded to the supporting means 8 such that the handle 6 is formed integrally of the shaft 4 at the base of the "U". This results in a stronger handle since it is less likely to bend under load. This configuration also offers improved stability for the object to be carried since the shaft 4 has two portions, each running the length of the object whilst the apparatus 2 is in use. The retaining means 16 is similarly improved since it has two points of contact with the object to be carried. The retaining means 16 has two of the hook portions 17 as used in the single shaft embodiment linked together by a connecting bar 22.

Referring now to Figs. 3 and 4, these show front and side views of an apparatus 2 for carrying an object in use. The apparatus 2 is loaded with a 610mm x 610mm x 38mm paving slab 18. The operation for loading a paving slab 18 onto the apparatus 2 comprises the following steps:
1) Tilt the paving slab 18 such that it rests on one corner.
2) Hold the retaining means 16 at the handle 6 end, keep the shaft 4 vertical and slide the supporting means 8 under the bottom edge 19 of the paving slab 18.
3) Lower the paving slab 18 such that the bottom edge 19 now rests on the supporting means 8.
4) Slide the retaining means 16 down the shaft until the hooked portion 17 engages with the top edge 20 of the paving slab 18.

The paving slab 18 is now securely held in the apparatus 2 and a user may conveniently pick up the apparatus by grasping the handle 6 with one hand. It is then convenient for the user to carry the apparatus 2 by their side with a straight arm in the manner generally employed when carrying a shopping bag. Since the apparatus 2 is designed to be carried at a users side at arms length the total length of the apparatus 2 should be no longer than the distance between the hand, when the arm is held straight against the side, and the ground, for a person of average height. Obviously this distance varies from person to person but for carrying a conventional 610mm x 610mm x 38mm paving slab 18 as described above then it would be convenient to have the total length of the apparatus 2 equal to approximately 660mm. This should ensure that the object is adequately supported and that the apparatus 2 will not contact the ground whilst in use.

A further benefit of the apparatus 2 is that a single paving slab 18 can be carried using only one hand. This means that a user, using a pair of carrying apparatus 2, can carry two paving slabs 18 at one time. This has substantial benefits over the usual method of carrying a paving slab 18 which involves using both hands and holding the slab in front of the body. Not only does it dramatically reduce the time taken for moving a large number of paving slabs 18 but it allows the weight to be more evenly distributed over the users body. This reduces the risk of injury and also improves balance whilst carrying the paving slabs 18.

## Claims

1. Apparatus for carrying an object comprising:
i) a rigid shaft having a handle associated with one end;
ii) supporting means associated with the other end of the shaft and adapted to engage a portion of the object to be carried in a manner supporting said object; and
iii) retaining means associated with the shaft and capable of retaining a further portion of the object, the retaining means being slidably disposed on the shaft.

2. Apparatus for carrying an object according to claim 1, wherein the retaining means comprises a hook which engages with the further portion of the object.

3. Apparatus for carrying an object according to claim 1 or claim 2, wherein the supporting means comprises a pair of parallel "U" shaped supports connected to the shaft by a "T" bar section, one "U" shaped support associated with each end of the "T" bar section, the "U" shaped supports arranged such that, in use, the object may rest on the base portions of said "U" shaped supports.

4. Apparatus for carrying an object according to any preceding claim, wherein the handle comprises a rope eye.

5. Apparatus for carrying an object according to any preceding claim, wherein the apparatus is made from mild steel.

6. Apparatus for carrying an object according to claim 5, wherein the mild steel is powder coated.

7. Apparatus for carrying an object substantially as hereinbefore described with reference to the accompanying drawings.
